(19) **Europäisches Patentamt**

**European Patent Office**

**Office européen des brevets**

(11) Veröffentlichungsnummer: **0 392 019**
**A1**

(12) **EUROPÄISCHE PATENTANMELDUNG**
veröffentlicht nach Art. 158 Abs. 3
EPÜ

(21) Anmeldenummer: **89906494.3**

(22) Anmeldetag: **20.04.89**

(86) Internationale Anmeldenummer:
**PCT/SU89/00105**

(87) Internationale Veröffentlichungsnummer:
**WO 89/11414 (30.11.89 89/28)**

(51) Int. Cl.⁵: **B63B 1/12**

(30) Priorität: **23.05.88 SU 4450873**

(43) Veröffentlichungstag der Anmeldung:
**17.10.90 Patentblatt 90/42**

(84) Benannte Vertragsstaaten:
**DE FR GB IT SE**

(71) Anmelder: **BERNITSYN, Andrei Anatolievich**
**ul. Sikeirosa, 21/6-1-48**
**Leningrad, 194354(SU)**

Anmelder: **DMITROCHENKO, Mikhail**
**Dmitrievich**
**ul. Sestroretskaya, 7-81**
**Leningrad, 197183(SU)**

Anmelder: **KIPIN, Artur Eduardovichitrievich**
**ul. Uchitelskaya, 19-2-170**
**Leningrad, 195269(SU)**

Anmelder: **KRAMAREV, Evgeny**
**Aleksandrovichch**

**pr. Vitebsky, 67-137-2-170**
**Leningrad, 196233(SU)**

(72) Erfinder: **BERNITSYN, Andrei Anatolievich**
**ul. Sikeirosa, 21/6-1-48**
**Leningrad, 194354(SU)**
Erfinder: **DMITROCHENKO, Mikhail**
**Dmitrievich**
**ul. Sestroretskaya, 7-81**
**Leningrad, 197183(SU)**
Erfinder: **KIPIN, Artur Eduardovichitrievich**
**ul. Uchitelskaya, 19-2-170**
**Leningrad, 195269(SU)**
Erfinder: **KRAMAREV, Evgeny**
**Aleksandrovichch**
**pr. Vitebsky, 67-137-2-170**
**Leningrad, 196233(SU)**

(74) Vertreter: **Nix, Frank Arnold, Dr.**
**Kröckelbergstrasse 15**
**D-6200 Wiesbaden(DE)**

(54) **SCHIFF FÜR HOHE GESCHWINDIGKEITEN.**

(57) Das Schnellboot hat einen Körper (1), Tragflügel (2) mit Sponsonschwimmern (3) und ein Heckleitwerk, bestehend aus einem Vertikalkiel (5) und einer Flosse (6), die eine umgekehrte V-Form aufweist und um eine Vertikalachse (7) durch eine Rudervorrichtung (13, 15) drehbar angeordnet ist. Bei der Kurvenfahrt erzeugen die Kräfte, die auf Flügelhälften der Flosse (6) einwirken, ein Moment, welches das Boot auf die bezüglich der Kurve innere Bordseite zur Krängung bringt, wodurch die Querkomponente des Auftriebs der Seitendrift entgegenwirkt, die durch die auf das Boot einwirkenden Fliehkräfte hervorgerufen wird.

FIG.1

# SCHNELLBOOT

## Gebiet der Technik

Die Erfindung bezieht sich auf den Schiffbau und insbesondere auf schnelle Boote.

## Vorhergehender Stand der Technik

Es ist bekannt, daß bei hohen Fahrtgeschwindigkeiten auf den Körper eines Transportmittels, z.B. eines schnellen Bootes, bedeutende aerodynamische Kräfte einzuwirken beginnen In mehreren Fällen können diese Kräfte, wenn der Körper des schnellen Bootes aerodynamische Flächen einschließt, das Körpergewicht teilweise bzw. vollkommen ausgleichen. Eine Fahrt in diesem Betriebszustand läßt den spezifischen Leistungsbedarf des Boots durch Senkung seines Widerstandes wesentlich vermindern.

Die besagten Effekte, die durch die Wirkung der Wasseroberfläche (eines Schirms) verstärkt werden, entstehen bei ausreichend großen Fahrtgeschwindigkeiten - in der Regel über 10 bis 12 $Fr_v$ (entsprechend 110 bis 120 km/h für ein Boot mit einer Wasserverdrängung von 1000 kg). Bei diesen Fahrtgeschwindigkeiten besteht eine schwer zu lösende Aufgabe darin, daß die Längs- und Seitenstabilität des Boots insbesondere beim Manövrieren sicherzustellen ist. Dies steht damit im Zusammenhang, daß im Falle, wenn unerwartete Störeinwirkungen, z.B. eine Welle, eine Bö entstehen, das Boot den Kontakt mit Wasser verlieren, in die Luft auffliegen und umkippen kann. Beim Manövrieren mit derartigen Geschwindi keiten wirken auf das Boot starke Fliehkräfte ein, die die Seitenstabilität des Bootes stören und ein Umkippen bewirken können oder, falls die Ruderorganfläche zu klein ist, wird das Boot praktisch unsteuerbar. Die besagten Umstände erforde größere Heckleitwerke, wobei als optimale Form der Heckleitwe derartiger schneller Schiffe eine T- bzw. eine V-Form gilt (N.I. Belavin, "Ekranoplany", 1977, Sudostroenie (Leningrad), S. 187 bis 195).

Es ist ein schnelles, sogenanntes Wing-in-ground-effect-Boot mit einem Körper mit einem T-förmigen Heckleitwerk, Tragflügeln mit Sponsonschwimmern, einem Motor mit einem Propulsionsorgan und einer Rudervorrichtung bekannt (N.I. Belavin, "Ekranoplany", 1977, Sudostroenie (Leningrad), S. 96 bis 99; DE, A, 1234539; US, A, 3190582). Das Heckleitwerk solch eines Bootes enthält einen Vertikalkiel, von dem ein Teil um eine Vertikalachse drehbar ausgeführt und mit der Rudervorrichtung verbunden ist, sowie eine Flosse mit zwei Flügelhälften, die mit einer neutralen V-Form angeordnet sind, wobei die Flosse auf einem unbeweglichen Kielteil befestigt ist.

Ein Nachteil dieses Bootes besteht in einer schlechten Manövrierfähigkeit bei seiner Bewegung über die Wasseroberfläche. Dies offenbart sich darin, daß zum Fahren einer Kurve mit einem erwünschten (kleinen) Radius der Bootsführer gezwungen wird, entweder den Fahrtzustand zu ändern und die Flughöhe zu erhöhen, oder die Fahrtgeschwindigkeit stark herabzusetzen, wobei das Boot in Berührung mit Wasser kommt. Bei Steigerung der Flughöhe, was an und für sich eine unwirtschaftliche und schwer steuerbare Maßnahme ist, soll das Boot auf die bezüglich der Kurve innere Bordseite zur Krängung gebracht werden. Dies wird dadurch bewirkt, daß ein zusätzliches Steuersystem und zusätzliche Steuerorgane, und zwar Querruder vorgesehen werden. Diese zusätzlichen Steuerorgane verkomplizieren die Bootssteuerung und sind vor allem bei einer kleinen Fahrthöhe uneffektiv. Infolgedessen wird, ungeachtet dessen, daß ein zusätzliches Steuersystem und zusätzliche Steuerorgane vorhanden sind, keine effektive Gegenwirkung gegenüber den beim Manövrieren des Boots entstehenden Fliehkräften erreicht, wodurch seine Steuerung bei der Bewegung in geringer Höhe über der Wasseroberfläche (dem Schirm) erschwert ist.

Offenbarung der Erfindung

Der Erfindung liegt die Aufgabe zugrunde, ein schnelles Boot zu schaffen, bei dem das Heckleitwerk so ausgeführt ist, daß es die Manövrierfähigkeit des Bootes bei hohen Fahrtgeschwindigkeiten ohne Anbringung zusätzlicher Steuerorgane an dem Boot verbessern läßt.

Diese Aufgabe wird bei einem schnellen Boot mit einem Körper, Tragflügeln mit Sponsonschwimmern, einem Motor, einer Rudervorrichtung und einem Heckleitwerk, enthaltend einen Vertikal kiel und eine Flosse mit zwei Flügelhälften, erfindungsgemäß dadurch gelöst, daß die Flosse um die Vertikalachse drehbar angebracht ist, eine umgekehrte V-Form aufweist und mit der Rudervorrichtung verbunden ist.

Dank dieser Ausführung der Flosse entsteht bei einer Kurvenfahrt an der bezüglich der Kurve inneren Flügelhälfte der Flosse eine zur Kurvenseite hin krängungserzeugende Kraft und der Auftrieb auf der bezüglich der Kurve äußeren Flügelhälfte steigt. Somit wirkt auf das Heckleitwerk und dementsprechend auf das ganze Boot ein Krängungsmoment ein, das die erforderliche innere Krängung bewirkt, sodaß der seitlich Drift, die unter dem Fliehkrafteinfluß entsteht, die Querkomponente des auf das Boot einwirkenden aerodynamischen Auftriebs entgegenwirkt, wodurch seine Manövriereigenschaften bedeutend verbessert werden und eine Kurvenfahrt mit vorgegebenem Radius in geringer Höhe über der Wasseroberfläche bei der Betriebsfahrtgeschwindigkeit sichergestellt wird.

Es ist zweckmäßig, die Flosse pfeilförmig auszuführen. Dadurch kann man die Resultierende des Auftriebs zum Heck hin verschieben und den Kraftarm der Flosse vergrößern, wodurch die Stabilität der Bootsfahrt wesentlich verbessert wird.

Falls der Vertikalkiel um die Vertikalachse drehbar angeordne und mit der Rudervorrichtung verbunden ist, ist es zweckmäßig, daß die Flosse am Vertikalkiel starr befestigt ist.

Dabei kann der Vertikalkiel in seinem unteren Teil einen Hohlraum zur Unterbringung des Oberwasserteils eines Außenbordmotors aufweisen.

Falls nur ein Teil des Vertikalkiels um eine Vertikalachse drehbar angeordnet und mit der Rudervorrichtung verbunden ist, ist es zweckmäßig, die Flosse auf dem besagten drehbaren Teil des Vertikalkiels zu befestigen.

Es ist auch zweckmäßig, daß der drehbare Teil des Vertikalkiels in seinem unteren Bereich einen Hohlraum zur Unterbringung eines Außenbordmotors in diesem Hohlraum aufweist.

Wenn der Außenbordmotor im Hohlraum des Vertikalkiels (bzw. im Hohlraum seines drehbaren Teils) untergebracht wird, werden dadurch der aerodynamische Motorwiderstand wesentlich vermindert und zugleich die Betriebsbedingungen der Flosse verbessert sowie der Motor vor Spritzwasser geschützt.

An einem Boot mit Außenbordmotor kann der drehbare Teil des Vertikalkiels auch über dem Motor angeordnet sein.

In diesem Falle werden auch eine Senkung des aerodynamischen Widerstandes und zugleich eine erleichterte Motorbedienung erzielt.

Gemäß einer Ausführungsvariante der Erfindung weist der Vertikalkiel zwei Elemente auf, die symmetrisch gegenüber der Mittellängsebene angeordnet sind.

Dies steigert die Effektivität des Kiels und verbessert dementsprechend die Manövriereigenschaften des Bootes dadurch, daß die Kielelemente aus dem Nachstrombereich entfernt werden, der durch gesenkte Geschwindigkeiten gekennzeichnet ist.

Dabei ist es zweckmäßig, daß die Vertikalkielelemente unter einem Winkel gegenüber der Mittellängsebene angeordnet sind.

Dadurch kann die Größe des Krängungsmomentes optimiert werden das bei einer Kurvenfahrt entsteht.

Am Boot mit einem Außenbordmotor können die Vertikalkieleleme auf den Motorseitenflächen befestigt sein.

Diese Anordnung der Kielelemente stellt eine Zugänglichkeit des Motors und seine erleichterte Bedienung sicher.

Zur Steigerung der aerodynamischen Wirksamkeit des Heckleitwerks und Senkung seiner Gewichts- und Maßkennzahlen kann die Flosse auf dem Körper angeordnet und können die Vertikalkielelemente auf den Flügelhälften der Flosse befestigt werden.

Wenn das Boot einen Außenbordmotor aufweist, der mit einer Strömungshaube versehen ist, ist es zweckmäßig, daß die Flosse an der Strömungshaube angebracht ist und die Elemente des Vertikalkiels auf den Flügelhälften der Flosse befestigt sind.

Dies trägt zur Senkung des aerodynamischen Widerstandes des Bootes insbesondere dann bei, wenn der Bootsführer eine liegende bzw. halbliegende Körperlage einnimmt.

Zu besseren Übersichtlichkeit des Außenbordmotors kann ein Abschnitt der Flosse im Bereich der Mittellängsebene des Bootes aus transparentem Werkstoff hergestellt werden.

Die Zugänglichkeit sowohl des Außenbordmotors als auch des stationären Motors kann verbessert werden, wenn in der Flosse ein Längsschlitz zwischen den Vertikalkielelementen ausgeführt wird.

Gemäß noch einer Ausführungsvariante der Erfindung enthält die Flosse ein zusätzliches Element, das zwischen ihren Flügelhälften angebracht ist.

Diese Ausführung der Flosse stellt die Steifigkeit ihrer Konstruktion sicher und trägt vor allem dazu bei, daß die Schwingungsinstabilität des Bootes verhindert wird.

Dabei ist zur Steigerung der statischen Stabilität des Bootes und zur Verlegung seines Höhendruckpunktes nach Vorne, was sich auf die Bootsstabilität günstig auswirkt, sowie zur Sicherung der Motorzugänglichkeit am Stoßabschnitt des zusätzlichen Elementes der Flosse mit jeder ihrer Flügelhälften die Sehne des zusätzlichen Elementes kleiner als jene der Flügelhälfte.

Falls am Boot ein stationärer Motor angeordnet ist, ist es zweckmäßig, daß das Boot mit einem hydrodynamischen Ruder versehen ist, das mit der Flosse verbunden ist.

Dadurch kann die Manövrierfähigkeit des Bootes in einem breiten Geschwindigkeitsbereich wesentlich gesteigert werden.

Nachstehend wird die Erfindung anhand einer Beschreibung ihrer Ausführungsbeispiele unter Bezugnahme auf Zeichnungen näher erläutert.

Kurze Beschreibung der Zeichnungen

Es zeigt:
Fig. 1 eine Seitenprojektion eines schnellen Bootes gemäß einer Ausführungsvariante der Erfindung,
Fig. 2 den Schnitt nach der Linie II-II in Fig. 1,

Fig. 3 eine Seitenprojektion des schnellen Bootes gemäß einer anderen Ausführungsvariante der Erfindung,

Fig. 4 eine Seitenprojektion des schnellen Bootes gemäß einer weiteren Ausführungsvariante der Erfindung,

Fig. 5 eine Frontprojektion des schnellen Bootes mit teilweisem Ausschnitt gemäß einer weiteren Ausführungsvariante der Erfindun

Fig. 6 eine Frontprojektion des schnellen Bootes gemäß einer weiteren Ausführungsvariante der Erfindung,

Fig. 7 eine Seitenprojektion des schnellen Bootes gemäß einer weiteren Ausführungsvariante der Erfindung,

Fig. 8 eine Frontprojektion des schnellen Bootes gemäß einer weiteren Ausführungsvariante der Erfindung,

Fig. 9 eine Frontprojektion des schnellen Bootes gemäß einer weiteren Ausführungsvariante der Erfindung,

Fig. 10 eine Draufsicht auf das Boot, das in Fig. 9 dargestellt ist,

Fig. 11 eine Seitenprojektion des schnellen Bootes gemäß einer weiteren Ausführungsvariante der Erfindung und

Fig. 12 Kräfte, die auf das erfindungsgemäße schnelle Boot bei seiner Kurvenfahrt wirken.

## Beste Ausführungsvariante der Erfindung

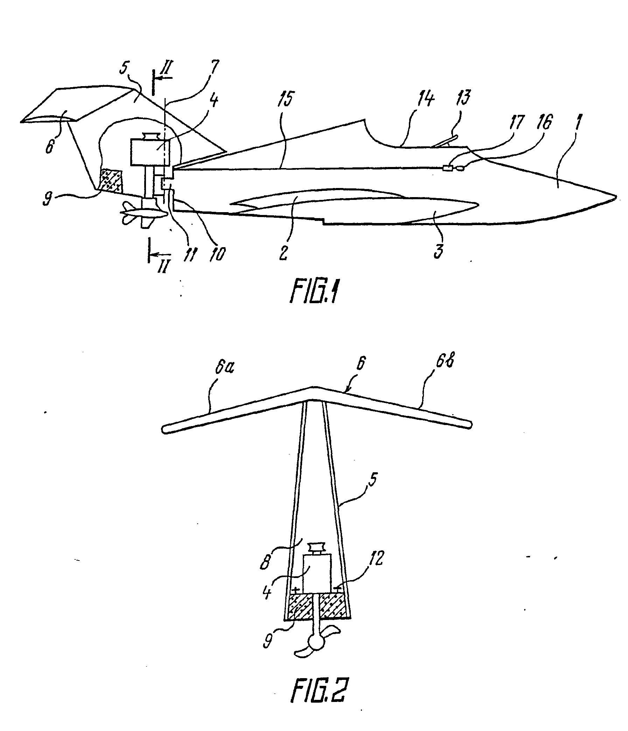

Das erfindungsgemäße schnelle Boot hat einen Körper 1 (Fig. 1), der langgestreckt und strömungsgünstig ausgeführt ist, Tragflügel 2 mit Sponsonschwimmern 3, die an Bordwänden des Körpers befestigt sind, und, am Bootsheck angebracht, einen Motor 4, z.I ein Außenbordmotor und ein Heckleitwerk, bestehend aus einem Ve tikalkiel 5 und einer Flosse 6, die zwei Flügelhälften 6a und 6 (Fig. 2) aufweist, die umgekehrt V-förmig angeordnet sind. Die Flosse 6 ist auf dem Vertikalkiel 5 starr befestigt, der um ein vertikale bzw. der Vertikalen nahe Achse 7 (Fig. 1) drehbar angeordn ist, die als eine strichpunktierte Linie eingezeichnet ist. Im Unterteil des Vertikalkiels 5 ist ein Hohlraum 8 vorgesehen, worin der Außenbordmotor 4 untergebracht ist. Dabei beträgt ein Dicke des Kiels 5  15 bis 17% der Länge seiner Sehne, wodurch eine Verkleidung des Motors 4 und eine erforderliche Stromlinie form des Kiels geschaffen werden können. Damit die Bootsstabili tät an einem Liegeplatz und bei einer Fahrt mit kleinen Geschwindigkeiten (einer Verdrängungsfahrt) sichergestellt, sowie der Tiefgang hinten verkleinert wird, befindet sich im Unterteil des Vertikalkiels 5 auch ein Auftriebsblock 9, der z. B. aus Schaumstoff hergestellt wird.

Der Außenbordmotor 4 ist am Heckspiegel 10 des Körpers 1 mit Hilfe einer Befestigungseinheit 11 befestigt und mit dem Vertikalkiel 5 durch eine leichtlösbare Verbindung 12 (Fig. 2), z. B. Bolzen, so verbunden, daß die Drehachse 7 (Fig. 1) des Kiels auch die Drehachse des Motors 4 ist. Die Motordrehachse muß nicht mit der Drehachse des Vertikalkiels 5 zusammenfallen, doch dabei ist eine zusätzliche Einrichtung einzubauen, mit deren Hilfe Drehbewegungen des Kiels und des Motors synchronisiert werden. Wenn aber der Kiel 5 und der Außenbordmotor 4 um ein und dieselbe Achse drehbar ausgeführt werden, wird die Bootskonstruktion vereinfacht.

Das Boot enthält auch eine Rudervorrichtung, bestehend aus einem Steuerrad 13, das im Cockpit 14 angeordnet ist, und Ruderleitungen 15, mit deren Hilfe das Steuerrad 13 mit dem Außenbordmotor 4 und dem Vertikalkiel 5 über Öffnungen 16 in Bordwänden des Körpers 1 verbunden ist. Die Ruderleitungen stützen sich gegen Stützen 17 ab.

Der Winkel der umgekehrten V-Form der Flosse 6 liegt in einem verhältnismäßig weiten Bereich von 2° bis 25°, vorzugsweise von 10° bis 20°. Sein Wert wird durch konkrete aerodynamische Besonderheiten des Schnellbootes, insbesondere durch das Flächenverhältnis der Tragflügel 2 und der Flosse 6, die Trimmlage des Bootes, den Winkel der V-Form der Tragflügel 2 usw. bestimmt.

In der in Fig. 1 und 2 dargestellten Ausführungsvariante des Bootes weist die Flosse 6 in Draufsicht eine Pfeilform auf, d. h. Enden ihrer Flügelhälften 6a und 6b sind zum Heck hin gegenüber ihren Befestigungsstellen am Vertikalkiel 5 verschoben. Dies stellt aber keine obligatorische Ausführungsbedingung der Erfindung dar und die Flügelhälften der Flosse können anders, z. B. mit einer Nullpfeilform angeordnet sein.

Die Pfeilform ermöglicht eine Verbesserung der Betriebsbedingungen der Flosse und eine Verlängerung ihres Kraftarms,
was sich auf der Stabilität des Bootes günstig auswirkt. Der
Hohlraum 8 im Vertikalkiel 5 ist auch nicht unbedingt notwendig. Im Falle, wenn der Körper 1 im Heckabschnitt ausreichend
groß und sein Vertikalmaß mit dem Vertikalmaß des Motors vergleichbar ist, kann der Motor unter dem Vertikalkiel angebracht sein.

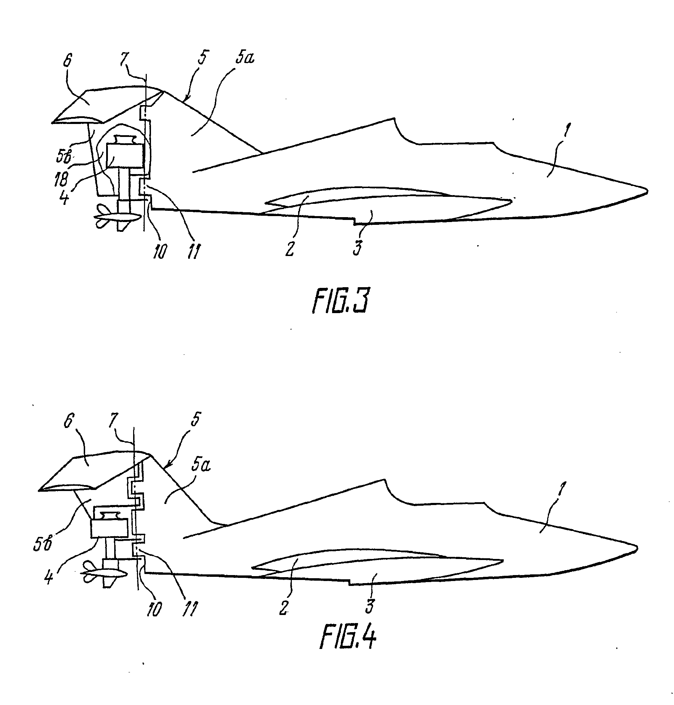

Fig. 3 zeigt eine andere Ausführungsvariante des erfindungsgemäßen Bootes, die sich von der vorstehend behandelten dadurch
unterscheidet, daß der Vertikalkiel 5 aus zwei Teilen - einem
unbeweglichen 5a und einem um die Achse 7 drehbaren 5b - besteht, wobei die Flosse 6 auf dem drehbaren Teil 5b des Vertikalkiels starr befestigt ist. Diese Ausführung des Kiels 5,
bei der er nur teilweise drehbar ist, ist bei einer hohen
Fahrtgeschwindigkeit des Bootes zweckmäßig, da dann die
Drehung sogar nur eines Teils des Vertikalkiels die erforderliche Manövrierfähigkeit gewährleistet. Ähnlich der in Fig. 1
und 2 dargestellten Konstruktion ist der drehbare Teil 5b
des Vertikalkiels 5 im Unterteil hohl ausgeführt und in diese
Hohlraum 18 ist der Außenbordmotor 4 untergebracht. Dies
ermöglicht eine wesentliche Verminderung des aerodynamischen
Widerstandes des Bootes, erschwert aber ein wenig den Zugang
zum Motor 4. Falls aber die erleichterte Bedienung des Außenbordmotors eine der Hauptanforderungen an das Boot ist, kann
der Motor 4 unter dem drehbaren Teil 5b des Kiels (Fig. 4)
angeordnet sein, die ohne größeren Hohlraum ausgeführt ist.
Diese Anordnung des Außenbordmotors 4 ist bei ausreichender
Höhe des Körpers 1 im Heck zweckmäßig, wenn der Körper den
Motor von der ankommenden Strömung vollkommen bzw. teilweise
abschirmt.

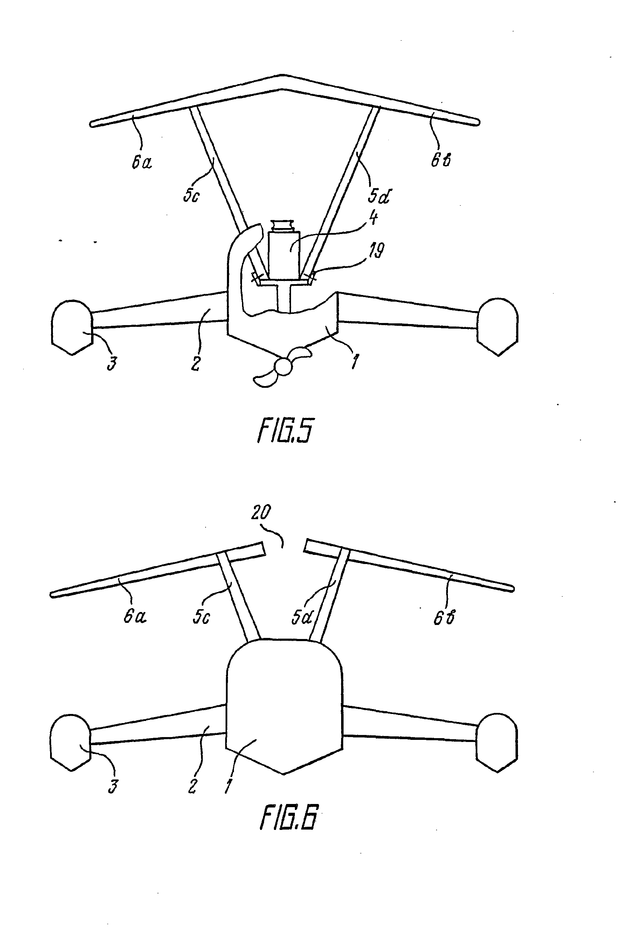

Fig. 5 zeigt eine weitere Ausführungsvariante des erfindungsgemäßen Bootes, bei der der Vertikalkiel aus zwei Elementen
5c und 5d besteht, die symmetrisch zur Mittellängsebene angeordnet und an Seitenflächen des Außenbordmotors 4 mit Hilfe von leichtlösbaren Verbindungen 19 befestigt sind. Dabei ist mit dem Element 5c die Flügelhälfte 6a der Flosse und mit dem Element 5d die Flügelhälfte 6b verbunden. Die Befestigung der Elemente 5c und 5d des Kiels auf Seitenflächen des Motors 4 stellt seine gute Zugänglichkeit sicher, obwohl dabei der aerodynamische Widerstand des Bootes ein wenig vergrößert wird. Außerdem ermöglicht die in Fig. 5 dargestellte Konstruktion die Verkleinerung von Abmessungen des Heckleitwerks und die Erleichterung seiner Steuerung. Die Elemente 5c und 5d des Kiels sind unter einem Winkel zur Mittellängsebene des Bootes so angeordnet, daß der Winkel zwischen jedem dieser Elemente 5c und 5d und der entsprechenden Flügelhälfte 6a und 6b der Flosse nahe 90° ist. Diese Anordnung der Elemente 5c und 5d des Kiels unter einem Winkel zur Mittellängsebene des Bootes verbessert erstens die aerodynamischen Betriebsbedingungen des Vertikalkiels, indem dessen Umströmung durch eine ungestörte Strömung sichergestellt wird, und zweitens vereinfacht sie die Herstellungstechnologie des Heckleitwerks sowie stellt die Festigkeit und Steifigkeit der Flosse sicher. Der Neigungswinkel der Elemente 5c und 5d des Kiels gegenüber der Mittellängsebene des Bootes liegt in der Regel in einem Bereich bis zu 30°. Bei einer Vergrößeru: des Neigungswinkels über den besagten Wert nimmt die aerodynamische Wirksamkeit des Vertikalkiels ab.

Damit die Wartung des Außenbordmotors 4, insbesondere bei kleinen vertikalen Abmessungen der Elemente 5c und 5d des Vertikalkiels erleichtert wird, sind Abschnitte der Flügelhälften 6a und 6b der Flosse, die zwischen den Elementen 5c und 5d des Kiels im Bereich der Mittellängsebene des Bootes liegen, aus festem transparenten Werkstoff, z.B. aus organischem Glas ausgeführt. Eine andere Möglichkeit, den Außenbordmotor leichter zugänglich zu machen, besteht darin, daß in der Flosse 6 ein Längsschlitz 20 (Fig. 6) ausgeführt wird.

Die Elemente 5c und 5d des Vertikalkiels können auch nicht an dem Außenbordmotor, sondern auf einem besonders dafür vorgesehenen drehbaren Element befestigt sein, aber diese Konstruktion ist im Vergleich mit den in Fig. 5 und 6 dargestellten bedeutend komplizierter und ihre Anwendung ist nur dann zweckmäßig, wenn das Boot mit einem stationären Motor versehen ist.

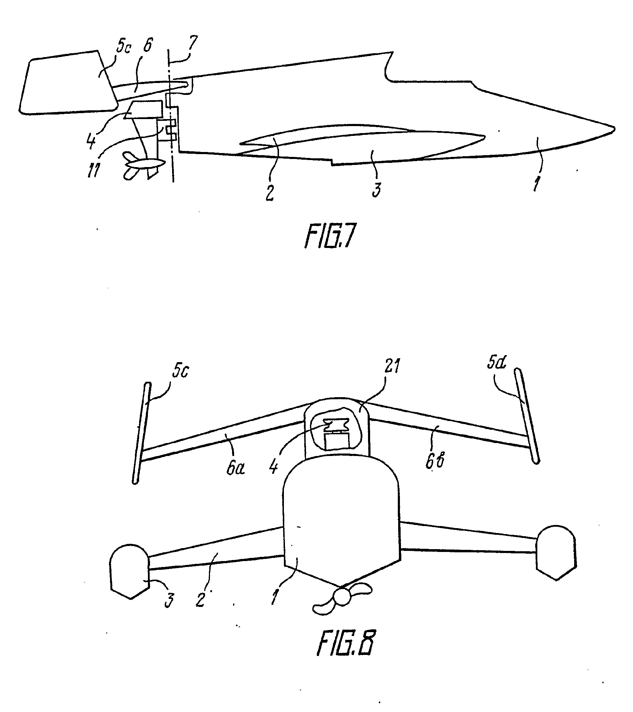

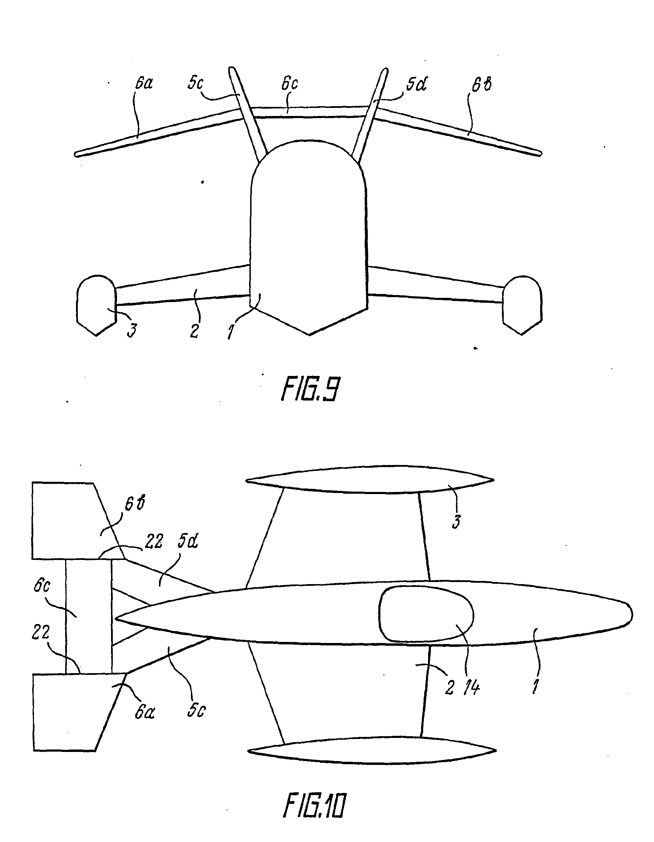

Im Falle, wenn der Körper 1 des Boots ausreichend groß und sein Vertikalmaß mit jenem des Oberwasserteils des Außenbordmotors 4 vergleichbar ist, und das aerodynamische Schema des Bootes so gewählt ist, daß der Strom im Heckteil kleine Abwinde aufweist, ist es zweckmäßig, das Heckleitwerk des Bootes gemäß Fig. 7 und 8 auszuführen. Wie es aus Fig. 7 ersichtlich ist, ist die Flosse 6 um die Vertikalachse 7 drehbar unmittelbar am Körper 1 angebracht. Falls aber der Außenbordmotor 4 mit einer Strömungshaube 21 (Fig. 8) versehe ist, wird die Flosse 6 auf der Strömungshaube 21 befestigt. In den beiden Fällen sind dabei die Elemente 5c und 5d des Vertikalkiels an den Enden der Flügelhälften 6a bzw. 6b der Flosse befestigt.

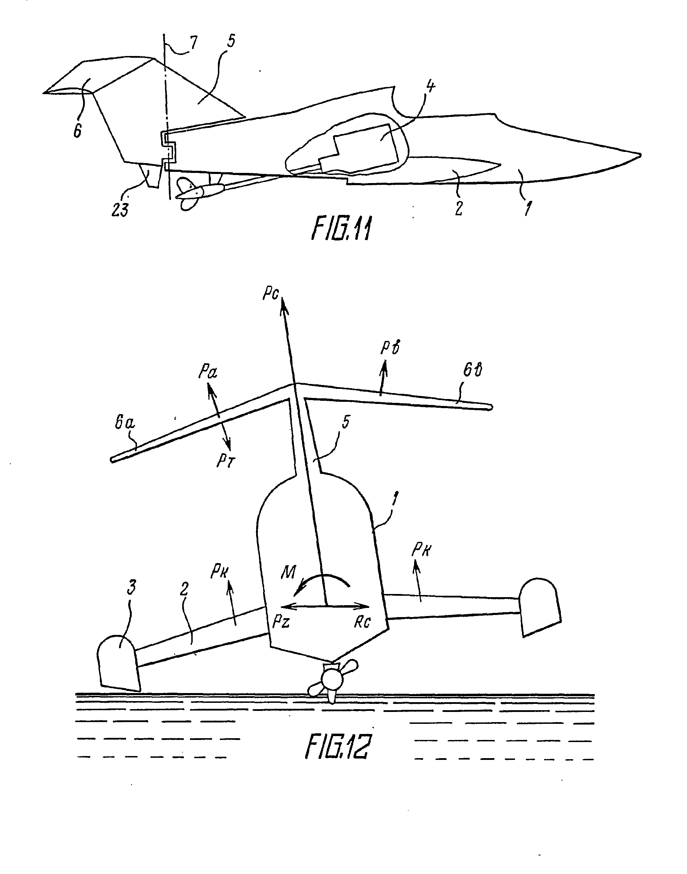

Gemäß Fig. 9 enthält die Flosse ein zusätzliches Element 6c, das zwischen den Flügelhälften 6a und 6b angeordnet ist. Diese Ausführung der Flosse trägt dazu bei, daß eine Schwingungsunstabilität des Bootes verhindert wird. Obwohl in Fig. 9 die Flosse mit dem zusätzlichen Element an einem Vertikalkiel befestigt ist, der aus zwei Elementen 5c und 5d besteht, ist es offensichtlich, daß diese Flosse auf einem Kiel, der als ein in der Mittellängsebene angeordnetes Element ausgeführt ist, am Bootskörper oder an der Strömungshaube des Außenbordmotors, d.h. bei den in Fig. 1, 3, 4, 7 und 8 dargestellten Konstruktionen angebracht sein kann. Dabei ist im Falle, wenn der Kiel aus zwei Elementen 5c und 5d (Fig. 7, 8 und 9) ausgeführt ist, die Sehne des zusätzlichen Elementes 6c der Flosse an seinem Stoßabschnitt 22 (Fig. 10) mit jeder Flügelhälfte 6a und 6b kleiner als die Sehne dieser Flügelhälften. Dadurch können gegebenenfalls die statische Stabilität des Bootes gesteigert und der Zugang zum Motor vereinfacht werden. Außerdem kann bei dieser Ausführung des zusätzlichen Elementes 6c der Flosse der Höhendruckpunkt zum Bootsbug hin verlegt werden.

Gemäß Fig. 11 ist der Motor 4 ein stationärer Motor, der im Körper 1 untergebracht ist und das Boot hat ein zusätzliches hydrodynamisches Ruder 23, das im Heckabschnitt des Bodens angeordnet und mit der Rudervorrichtung verbunden ist. Zur Vereinfachung der Bootskonstruktion kommt der Schaft des aerodynamischen Ruders mit der Drehachse 6 des Vertikalkiels 5 und der Flosse 6 zur Deckung.

Bei der Bewegung des Bootes im Wasser wirkt auf dieses ein Auftrieb $P_c$ (Fig. 12), der der Summe des Auftriebs $P_k$, der auf die Tragflügel 2 wirkt, und der Auftriebe $P_a$, $P_b$, die auf die Flügelhälften 6a bzw. 6b der Flosse wirken, gleich ist. Nachdem das Boot eine bestimmte Geschwindigkeit, z.B. 8 bis 12 $Fr_v$ erreicht hat, gleicht der Auftrieb $P_c$ das Bootsgewicht aus und das Boot hat keinen Kontakt mehr mit Wasser durch Gleitflächen des Körpers 1 und der Sponsonschwimmer 3. Dabei bleibt der Propeller des Motors 4 im Wasser und gewährleistet die erforderliche Fahrtgeschwindigkeit. Der Außenbordmotor 4, der durch den Vertikalkiel 5 abgeschirmt ist, übt einen minimalen Widerstand der Bewegung aus, wodurch der Widerstand des ganzen Bootes minimiert wird. Bei einer Drehung des Steuerrads 13 (Fig. 1) drehen sich der Vertikalkiel 5 bzw. sein drehbarer Teil 5b (Fig. 3, 4) und die Flosse 6. Da die Flosse 6 in einer umgekehrten V-Form ausgeführt ist, entsteht dabei auf der bezüglich der Kurvenfahrt inneren Flügelhälfte, z.B. bei einer Rechtswendung auf der rechten Flügelhälfte 6a, ein Abtrieb $P_T$ (Fig. 12) und auf der äußeren Flügelhälfte 6b nimmt der Auftrieb $P_b$ zu. Infolgedessen beginnt auf das Heckleitwerk und dementsprechend auf das ganze Boot ein starkes Moment M einzuwirken, das eine Steuerbordkrängung des Bootes bewirkt. Dabei wird die bei der Kurvenfahrt entstehende Fliehkraft $R_C$ durch die Querkomponente $P_Z$ des Auftriebs $P_C$ ausgeglichen. Dies steigert die Seitenstabilität beim Manövrieren und ermöglicht es dem Bootsführer, Kurven mit einem verhältnismäßig kleinem Radius ohne Geschwindigkeitssenkung auszuführen. Das besagte Krängungsmoment M bewirkt bei einer kleinen Flughöhe eine Berührung mit Wasser der Innenfläche eines - in diesem Falle des rechten - Sponsonschwimmers 3, an dem eine starke hydrodynamische Kraft entsteht, die eine Seitendrift verhindert.

Wenn das Boot auf einem geraden Kurs fährt und darauf ein starker Seitenwind einwirkt, weichen bekannte Boote, z.B. vom in den eingangs genannten Quellen beschriebenen Typ, vom Kurs ab oder legen sich auf die Leeseite. Das erfindungsgemäße Boot weist infolgedessen, daß seine Flosse mit umgekehrter V-Form ausgeführt ist, und insbesondere dann, wenn auch die Tragflügel eine umgekehrte V-Form haben, keinen solchen Nachteil auf, weil auf seinem luvseitigen Flügel 2 sowie auf der luvseitigen Flügelhälfte der Flosse, z.B. der Flügelhälfte 6a ein Abtrieb und auf der leeseitigen Flügelhälfte 6b ein zusätzlicher Auftrieb entsteht. Ein dabei entstehendes Krängungsmoment, das entgegen der Windrichtung wirkt, gleicht einen großen Teil des Krängungsmomentes aus, das infolge des Auftretens von Kräften am Vertikalkiel und anderen Bootselementen entsteht.

In den in Fig. 7 und 8 dargestellten Bootskonstruktionen, in denen die Elemente 5c und 5d des Vertikalkiels an der Flosse 6 unter einem Winkel zur Mittellängsebene des Bootes angeordnet sind, wirkt die Krängungskraft nicht nur auf die bezüglich der Kurve innere Flügelhälfte der Flosse, die Flügelhälfte 6a, sondern auch das entsprechende Element 5c des Vertikalkiels. Dies steigert zusätzlich das Krängungsmoment und verbessert dementsprechend die Manövrierfähigkeit des Bootes. Außerdem wirken die Elemente 5c und 5d des Vertika kiels des in Fig. 7 und 8 dargestellten Bootes als aerodynamische Endscheiben, die ein Luftüberströmen von der Druckfläche der Flosse 6 auf ihre Saugfläche verhindern und die Wirksamkeit der Flosse steigern.

Die optimale Größe der Innenkrängung und folglich die erforder liche Seitenstabilität und die Manövrierfähigkeit des Bootes werden durch eine entsprechende Dimensionierung der Elementflächen des Heckleitwerks und der Tragflügel, deren Anstellwinkel, des Winkels der V-Form der Flosse, der Trimmlage des Bootes usw. bei Projektierung des Bootes sichergestellt.

Wenn das Boot mit einem stationären Motor versehen ist, hat man zusätzlich die Fläche eines hydrodynamischen Ruders zu berücksichtigen.

Industrielle Anwendbarkeit

Die Erfindung kann in mehreren Klassen von Sport-, Renn- und Ausflugsbooten, vor allem Booten mit aerodynamischer Entlastung (d.h. solchen, bei denen bei einer schnellen Fahrt das Gewicht des Bootskörpers nicht nur durch hydrostatische und hydrodynamische Kräfte, sondern auch durch Luftkräfte ausgeglichen wird), sowie für die sogenannte Wing-in-ground-effect-Boote verwendet werden. Zu Booten mit einer aerodynamischen Entlastung gehören unter anderem Renngleitboote und Scooters z.B. der Klassen R1, R2, OA, OB, OC, OD, ON usw.

P a t e n t a n s p r ü c h e

1. Schnellboot mit einem Körper (1), Tragflügeln (2) mit Sponsonschwimmern (3), einem Motor (4), einer Rudervorrichtun und einem Heckleitwerk, enthaltend einen Vertikalkiel (5) und eine Flosse (6) mit zwei Flügelhälften (6a, 6b),

dadurch gekennzeichnet, daß die Flosse (6) um eine Vertikalachse (7) drehbar angebracht ist, eine umgekehrte V-Form aufweist und mit der Rudervorrichtung verbunden ist.

2. Boot nach Anspruch 1, dadurch gekennzeichnet, daß die Flosse (6) pfeilförmig ausgeführt ist.

3. Boot nach Anspruch 1 oder 2, bei dem der Vertikalkiel (5) um eine Vertikalachse (7) drehbar angebracht und mit der Rudervorrichtung verbunden ist, dadurch gekennzeichnet, daß die Flosse (6) am Vertikalkiel (5) starr befestigt ist.

4. Boot nach Anspruch 3, bei dem der Motor (4) ein Außenbordmotor ist, dadurch gekennzeichnet, daß der Vertikalkiel (5) im Unterteil einen Hohlraum (8) hat und der Motor (4) in diesem Hohlraum (8) untergebracht ist.

5. Boot nach Anspruch 1 oder 2, bei dem ein Teil (5b) des Vertikalkiels (5) um eine Vertikalachse (7) drehbar gelagert und mit der Rudervorrichtung verbunden ist, dadurch gekennzeichnet, daß die Flosse (6) am drehbaren Teil (5b) des Vertikalkiels (5) starr befestigt ist.

6. Boot nach Anspruch 5, bei dem der Motor (4) ein Außenbordmotor ist, dadurch gekennzeichnet, daß der drehbare Teil (5b) des Vertikalkiels (5) einen Hohlraum (18) im Unterteil hat und der Motor (4) in diesem Hohlraum (18) untergebracht ist.

7. Boot nach Anspruch 5, bei dem der Motor (4) ein Außenbordmotor ist, dadurch gekennzeichnet, daß der drehbare Teil (5b)

- 2 -

des Vertikalkiels (5) oberhalb des Motors (4) angeordnet ist.

8. Boot nach Anspruch 3, dadurch gekennzeichnet, daß der Vertikalkiel (5) zwei Elemente (5c, 5d) enthält, die symmetrisch zur Mittellängsebene des Bootes angeordnet sind.

9. Boot nach Anspruch 8, dadurch gekennzeichnet, daß die Elemente (5c, 5d) des Vertikalkiels (5) unter einem Winkel zur Mittellängsebene des Bootes angeordnet sind.

10. Boot nach Anspruch 8 oder 9, bei dem der Motor (4) ein Außenbordmotor ist, dadurch gekennzeichnet, daß die Elemente (5c, 5d) des Vertikalkiels (5) auf Seitenflächen des Motors (4) befestigt sind.

11. Boot nach Anspruch 8 oder 9, dadurch gekennzeichnet, daß die Flosse (6) am Körper (1) angebracht ist und die Elemente (5c, 5d) des Vertikalkiels (5) an den Flügelhälften (6a, 6b) der Flosse (6) befestigt sind.

12. Boot nach Anspruch 8 oder 9, bei dem der Motor (4) ein Außenbordmotor ist und mit einer Strömungshaube (21) versehen ist, dadurch gekennzeichnet, daß die Flosse (6) an der Strömungshaube (21) angebracht ist und die Elemente (5c, 5d) des Vertikalkiels (5) auf den Flügelhälften (6a, 6b) der Flosse (6) befestigt sind.

13. Boot nach Anspruch 8 oder 9, bei dem der Motor (4) ein Außenbordmotor ist, dadurch gekennzeichnet, daß ein Abschnitt der Flosse (6) im Bereich der Mittellängsebene des Bootes aus transparentem Werkstoff ausgeführt ist.

14. Boot nach Anspruch 8 oder 9, dadurch gekennzeichnet, daß die Flosse (6) einen Längsschlitz (20) aufweist, der zwischen den Elementen (5c, 5d) des Vertikalkiels (5) angeordnet ist.

15. Boot nach Anspruch 1 oder 2, dadurch gekennzeichnet, daß die Flosse (6) ein zusätzliches Element (6c) enthält, das zwischen ihren Flügelhälften (6a, 6b) angebracht ist.

16. Boot nach Anspruch 15, dadurch gekennzeichnet, daß am Stoßabschnitt (22) des zusätzlichen Elementes (6c) der Flosse (6) mit jeder ihrer Flügelhälften (6a, 6b) die Sehne des zusätzlichen Elementes (6c) kleiner ist als jene der Flügelhälfte (6a, 6b).

17. Boot nach Anspruch 1 oder 2, bei dem der Motor (4) ein stationärer Motor ist, dadurch gekennzeichnet, daß es zusätzlich ein hydrodynamisches Ruder (23) enthält, das mit der Flosse (6) verbunden ist.

FIG.1

FIG.2

FIG.3

FIG.4

FIG.5

FIG.6

FIG.7

FIG.8

FIG.9

FIG.10

FIG.11

FIG.12

_3,430,444.3_

# INTERNATIONAL SEARCH REPORT

International Application No  PCT/SU 89/00105

**I. CLASSIFICATION OF SUBJECT MATTER** (if several classification symbols apply, indicate all)

According to International Patent Classification (IPC) or to both National Classification and IPC

IPC$^4$     B63B 1/12

**II. FIELDS SEARCHED**

Minimum Documentation Searched [7]

| Classification System | Classification Symbols |
|---|---|
| IPC$^4$ | B63B 1/10-B63B 1/12,B63B 35/72,B60V 1/08-B60V 3/06 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | GB, A, 2 120990 ((PAUL KJOLSETH)      14 December 1983 /14.12.83/ pages 1-4 | 1-2 |
| A | GB, B, 1 296046 (Alexander M. Lippisch) 15 November 1972 /15.11.72/ pages 1-3 | 1 |
| A | US, A, 3 662 854 (Bertin & Cie) 16 May 1972 /16.05.72/ pages 1-4 | 1 |
| A | US, A, 3 182 623 (Secretary of Navy) 11 May 1965 /11.05.65/ pages 1-2 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 24 July 1989 (24.07.89) | 4 September 1989 (04.09.89) |
| International Searching Authority          ISA/SU | Signature of Authorized Officer |

Form PCT/ISA/210 (second sheet) (January 1985)